# FASCICULE DE BREVET EUROPEEN

(11) **EP 1 388 443 B1**
(45) Date de publication et mention de la délivrance du brevet: **02.11.2006**
(21) Numéro de dépôt: 03016496.6
(22) Date de dépôt: 22.07.2003
(51) Int. Cl.: B60H 1/00

(54) **Appareil de climatisation et/ou de chauffage pour habitacle de véhicule automobile muni d'au moins un actionneur pour volet articulé**
Klima- und/oder Heizanlage für den Fahrgastraum eines Kraftfahrzeuges mit zumindest einem schwenkbaren Klappeantrieb
Air-conditioning and/or heating device for the passenger compartment of a motor vehicle, with at least one actuator for a hinged flap

(30) Priorité: 06.08.2002 FR 0209996
(43) Date de publication de la demande: 11.02.2004
(73) Titulaire: VALEO SYSTEMES THERMIQUES, 78320 Le Mesnil Saint-Denis (FR)
(72) Inventeur: Cheriaux, Olivier, 78610 Le Perray en Yvelines (FR)

(56) Documents cités:
- EP-A- 1 152 154
- EP-A- 1 216 862
- DE-U- 8 620 239

## Description

L'invention se rapporte à un appareil de climatisation et/ou de chauffage pour véhicule automobile muni d'au moins un actionneur pour volet articulé. Un tel appareil est décrit dans le document DE 8 620 235 U.

Dans les appareils actuels de climatisation et/ou de chauffage pour véhicule automobile, la boîte d'admission d'air possède au moins un volet articulé d'obturation ou de mixage disposé en amont du pulseur et des organes de chauffage et de refroidissement de l'appareil. Un tel volet est commandé par un actionneur, par exemple un moto-réducteur de petite taille, qui est généralement lié extérieurement à la paroi d'un conduit d'admission d'air par plusieurs points de fixation.

Or, de tels actionneurs provoquent des mouvements rapides et brutaux pour régler le débit d'air de l'appareil de climatisation et/ou de chauffage. Des vibrations importantes se produisent alors, au niveau de la paroi externe de fixation, qui est le plus souvent de fine épaisseur. Ceci provoque ainsi un bruit relativement élevé et répétitif dans l'habitacle et engendre une gêne pour le confort des occupants, - en particulier pour la communication des passagers -, et peut conduire à un accroissement de la fatigue et une baisse de l'attention du conducteur.

Pour résoudre ce problème, l'invention propose de limiter le bruit généré, en réduisant non seulement la création mais surtout la propagation du « rayonnement » vibratoire dans la structure d'admission d'air de l'appareil de climatisation et/ou de chauffage.

Plus précisément, l'invention a pour objet un appareil de climatisation et/ou de chauffage pour habitacle de véhicule automobile comprenant au moins un conduit d'air présentant une paroi externe logeant un volet articulé autour d'un axe, ledit volet étant commandé par un actionneur fixé en plusieurs points de fixation sur une partie rigidifiée de la paroi. Afin de réduire la transmission des vibrations causées par le fonctionnement de l'actionneur, ladite partie rigidifiée présente au moins une zone ajourée dépourvue de matière à proximité immédiate d'au moins un point de fixation de l'actionneur, la partie rigidifiée étant formée d'un maillage de nervures délimitant des unités de matière de paroi et les points de fixation étant aux intersections de ce maillage, la partie ajourée formée par la ou les zones ajourées est constituée par les unités de matière entourant les points de fixation.

Préférentiellement, les nervures sont asymétriques pour assurer la tenue mécanique des points de fixation et éviter les modes vibratoires harmoniques.

Plus particulièrement, l'actionneur est relié à la paroi externe du conduit en au moins trois points distincts, à l'aide de plots venant de moulage et renforcés par des filets, avantageusement en étoile.

Afin d'éviter les fuites d'air, le volet masque sensiblement, par un flanc latéral, les zones ajourées d'une entrée d'air non souhaité, selon sa position angulaire.

De manière préférée, le volet est du type tambour formé par une portion de cylindre limitée par des joues latérales.

Selon un mode préféré de réalisation de l'invention, le conduit est la boîte d'admission d'air placée en entrée de l'appareil, cette boîte présentant une entrée d'air externe, une entrée d'air recyclé, une sortie d'air et deux parois latérales dont l'une forme la paroi rigidifiée.

D'autres caractéristiques, détails et avantages de l'invention ressortiront à la lecture de la description d'un exemple de réalisation non limitatif, en référence aux dessins annexés donnés à titre d'exemple qui représentent respectivement :
- la figure 1, une vue en coupe d'un conduit de circulation d'air d'un appareil de chauffage et/ou de climatisation conforme à l'invention et comprenant en particulier une boîte d'admission d'air,
- la figure 2, une vue en perspective éclatée de la boîte d'admission d'air de la figure 1, muni d'un volet d'obturation et d'un actionneur,
- la figure 3, une vue de côté de la figure 2 avec le volet d'obturation dans une première position, et
- la figure 4, une vue de côté de la figure 2 avec le volet d'obturation dans une seconde position.

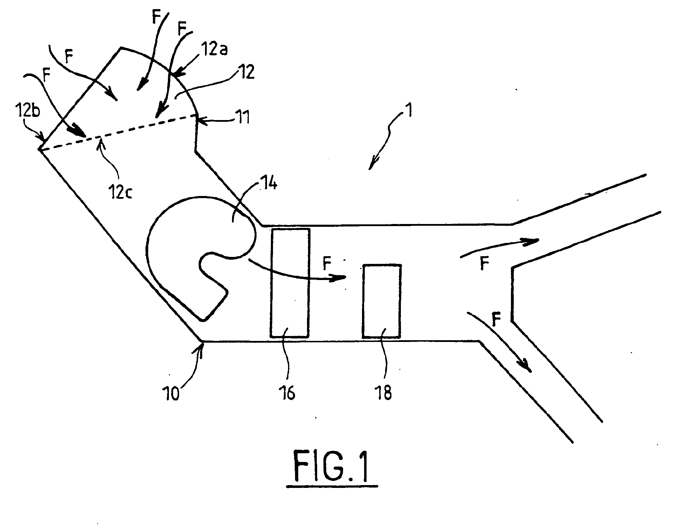

La figure 1 représente schématiquement un exemple d'appareil 1 de chauffage et/ou de climatisation pour habitacle de véhicule, adapté selon l'invention. Cet appareil 1 comprend notamment un conduit d'aération 10, limité par une paroi externe 11. Ce conduit est en matière thermoplastique ayant une épaisseur de quelques millimètres, deux à trois millimètres dans l'exemple. Ce conduit 10 forme, à son entrée, une boîte d'admission d'air 12 et loge, selon le sens de circulation de l'air (flèches F), un pulseur 14, un évaporateur 16 et un radiateur 18.

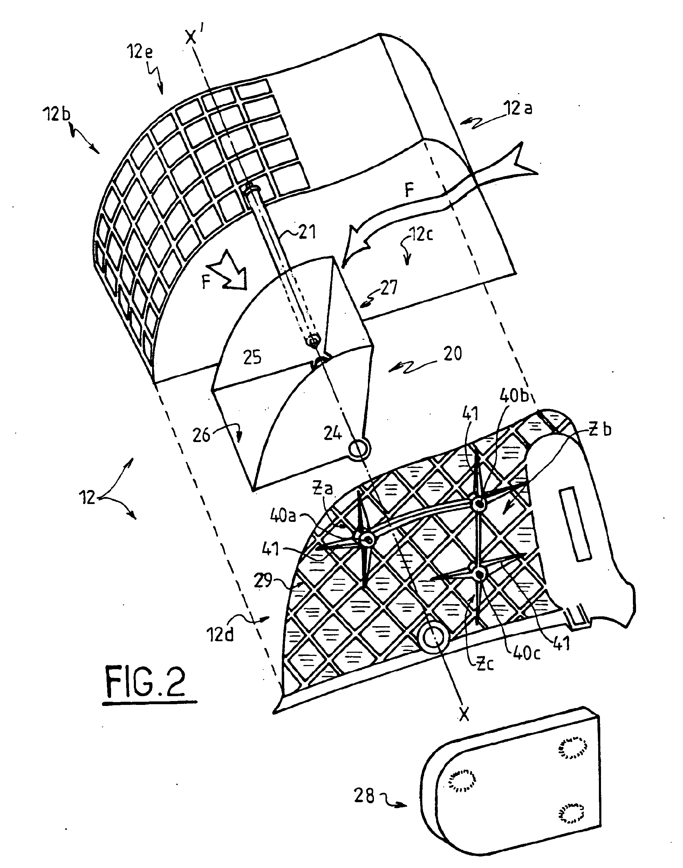

Comme cela est représenté sur les figures 2 à 4, la boîte d'admission d'air 12 loge un volet d'obturation articulé 20, de type tambour dans l'exemple, formé d'une portion de cylindre creux, environ un quart de cylindre, limitée par deux joues latérales, 22 et 24, ayant sensiblement la forme d'une portion de disque (un quart de disque) et deux parois sensiblement rectangulaires 26 et 27.

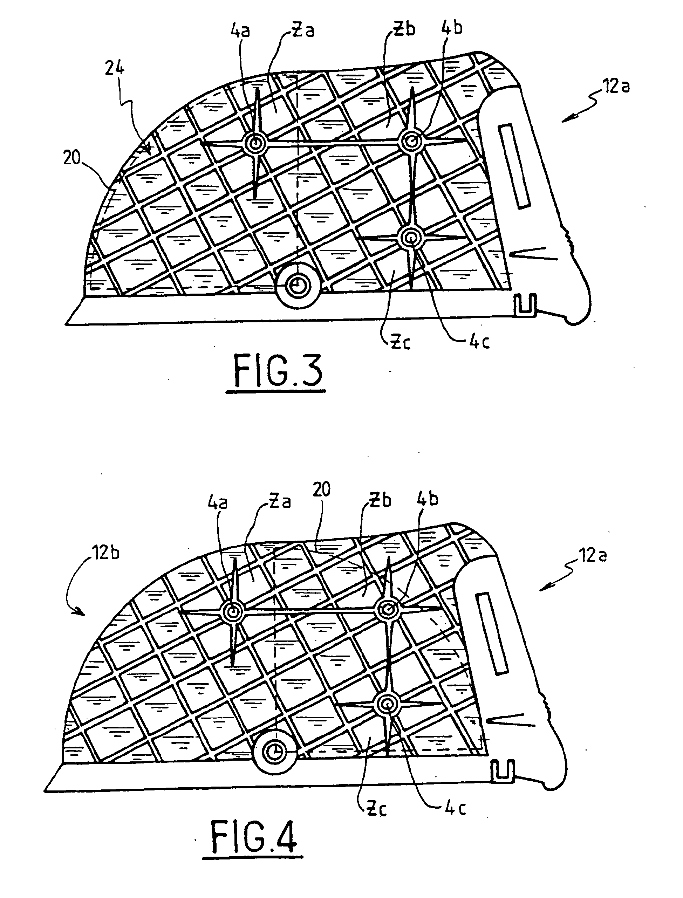

Le volet d'obturation 20 est monté pivotant autour d'un axe xx' traversant la boîte d'admission d'air 12 pour, alternativement, venir obturer une entrée 12a d'air externe (comme plus particulièrement illustré par la figure 4), ou bien une entrée grillagée 12b d'air recyclé et filtré provenant de l'habitacle (comme plus particulièrement illustré par la figure 3). La boîte d'admission d'air 12 est par ailleurs équipée d'une sortie d'air 12c aboutissant au conduit d'aération 10, en amont du pulseur 14 (figure 1), ainsi que deux parois latérales 12d et 12e.

Le volet d'obturation 20 est commandé en rotation autour d'un arbre 21 selon un axe X'X par un moto réducteur électrique 28. Cet actionneur 28 est fixé extérieurement sur la paroi latérale 12d, ou flanc, de la boîte d'admission d'air 12 en trois points distincts 4a, 4b, 4c (figures 3 et 4).

La paroi latérale 12d est renforcée par un maillage de nervures de profil asymétrique 29, et chaque point de fixation est formé en une intersection de ce maillage. Des plots en surélévation 40a, 40b, 40c assurent le montage du moto-réducteur 28 aux points de fixation. Le moto-réducteur est en prise directe ou indirecte avec l'arbre de rotation 21 du volet d'obturation 20.

Des filets 41 formés entre les plots et les nervures 29 menant aux plots renforcent la solidité des fixations. La matière plastique de la paroi latérale 12d, des plots et des filets de renfort viennent d'un même moule. Certains filets peuvent se prolonger de manière à joindre deux plots.

Afin d'éviter que la paroi 11 ne vibre avec le moto-réducteur, des zones ajourées, Za, Zb, Zc, sont réalisées sur la paroi latérale 12d, à proximité immédiate des plots respectivement 40a, 40b, 40c du moto réducteur 28. Ces zones ajourées sont formées par évidement des unités de matière constitutive de la paroi latérale bordées par des nervures 29. Les quatre unités adjacentes aux points de fixation de centrage de chaque plot sont évidées dans l'exemple de réalisation. En variante, un nombre inférieur d'unités (1 à 3) ou même éventuellement supérieur à quatre, est ou sont évidées.

Cette structure maillée permet une réduction notable des bruits vibratoires créés par le moto réducteur et pouvant être gênants pour les occupants du véhicule, sans perte de charges ni diminution de la résistance mécanique de la boîte d'admission d'air 12.

Dans une première position illustrée par la figure 3, le volet d'obturation 20 est dans sa position d'admission de l'air externe, c'est-à-dire qu'il obture l'arrivée d'air recyclé 12b. La joue latérale 24 du volet 20 obture sensiblement l'ensemble des zones ajourées Za de la boîte d'admission d'air 12 en communication avec l'air recyclé.

Dans une seconde position illustrée par la figure 4, le volet d'obturation 20 est dans sa position d'admission de l'air recyclé provenant de l'habitacle par l'arrivée 12a, c'est-à-dire qu'il obture l'arrivée d'air externe 12a. La joue latérale 24 obture sensiblement l'ensemble des zones ajourées Zb et Zc en communication avec l'air externe. Des joints périphériques (non représentés) peuvent être prévus tout autour du volet 20 pour améliorer l'étanchéité par rapport à la paroi externe de la boîte d'admission d'air 12, si nécessaire.

Il doit être bien entendu toutefois que ces exemples sont donnés uniquement à titre d'illustration de l'objet de l'Invention dont ils ne constituent en aucune manière une limitation.

Ainsi, de manière générale, il est possible de réaliser ces zones ajourées dans un conduit de circulation d'air et pas uniquement dans une boîte d'admission d'air, dès lors qu'il y a risque de création de vibrations dues au déplacement d'un actionneur pour volet d'obturation ou de mixage. L'utilisation de lèvres périphériques et de recouvrement de la zone ajourée par le volet permet de régler les problèmes d'étanchéité vis-à-vis de l'air.

Le nombre de points de fixation de l'actionneur peut être supérieur ou inférieur à trois, et il peut y avoir plusieurs actionneurs partageant un même ensemble de points de fixation sur la paroi du conduit à protéger, par exemple sur la boîte d'admission d'air.

Le moto-réducteur peut être remplacé par de nombreux autres moyens de commande tel qu'un moteur pas à pas ou un système à crémaillère ou à pignon cranté.

## Revendications

1. Appareil (1) de climatisation et/ou de chauffage pour habitacle de véhicule automobile comprenant au moins un conduit d'air (10) présentant une paroi externe (11) logeant un volet d'obturation (20) articulé autour d'un axe (X'X), ledit volet (20) étant commandé par un actionneur (28) fixé en plusieurs points (4a, 4b, 4c) sur une partie rigidifiée de la paroi (11), **caractérisé en ce que** ladite paroi rigidifiée (12d) présente au moins une zone ajourée (Za, Zb, Zc) dépourvue de matière à proximité immédiate d'au moins un point de fixation de l'actionneur (28) pour réduire la transmission des vibrations causées par le fonctionnement de l'actionneur,la partie rigidifiée étant formée d'un maillage de nervures (29) délimitant des unités de matière de paroi (12d) et les points de fixation étant aux intersections de ce maillage, la partie ajourée formée par la ou les zones ajourées (Za, Zb, Zc) est constituée par les unités de matière entourant les points de fixation.

2. Appareil selon la revendication 1, dans lequel les nervures (29) sont asymétriques pour assurer une tenue mécanique aux points de fixation et éviter les modes vibratoires harmoniques.

3. Appareil selon l'une quelconque des revendications précédentes, dans lequel l'actionneur (28) est relié à la paroi externe (11) du conduit (10) en au moins trois points distincts à l'aide de plots (40a, 40b, 40c) venant de moulage et renforcés par des filets (41).

4. Appareil selon l'une quelconque des revendications précédentes, dans lequel le volet (20) masque sensiblement, par un flanc latéral (24), les zones ajourées d'une entrée d'air non souhaité, selon sa position angulaire.

5. Appareil selon la revendication 4, dans lequel le volet (20) est du type tambour présentant une portion de cylindre limitée par des joues latérales (24, 25).

6. Appareil selon l'une quelconque des revendications précédentes, dans lequel le conduit est une boîte d'admission d'air (12) placé en entrée de l'appareil, cette boîte présentant une entrée d'air externe (12a), une entrée d'air recyclé (12b), une sortie d'air (12c) et deux parois latérales (12d, 12e) dont l'une (12d) forme la paroi rigidifiée.

## Claims

1. Motor vehicle passenger compartment air conditioning and/or heating device (1) comprising at least one air duct (10) with an external wall (11) housing a sealing flap (20) articulated around an axis (X'X), said flap (20) being controlled by an actuator (28) attached at several points (4a, 4b, 4c) on a stiffened part of the wall (11), **characterised in that** said stiffened wall (12d) comprises at least one punched zone (Za, Zb, Zc) free from material in the immediate vicinity of at least one attachment point of the actuator (28) to decrease the transmission of vibrations caused by the operation of the actuator, the stiffened part being formed from a mesh of ribbing (29) delimiting units of wall material (12d) and the attachment points being at the intersections of this mesh, the punched part formed by the punched zone(s) (Za, Zb, Zc) consists of units of material surrounding the attachment points.

2. Device according to claim 1, wherein the ribbing (29) is asymmetrical to ensure mechanical resistance at the attachment points and prevent harmonic modes of vibration.

3. Device according to any of the above claims, wherein the actuator (28) is connected to the external wall (11) of the duct (10) in at least three separate points using studs (40a, 40b, 40c) produced from moulding and reinforced by rules (41).

4. Device according to any of the above claims, wherein the flap (20) substantially masks, by means of a side flank (24), the punched zones of an undesired air inlet, according to its angular position.

5. Device according to claim 4, wherein the flap (20) is of the drum type comprising a portion of cylinder limited by side flanges (24, 25).

6. Device according to any of the above claims, wherein the duct is an air intake box (12) positioned at the inlet of the device, this box comprising an external air inlet (12a), a recycled air inlet (12b), an air outlet (12c) and two side walls (12d, 12e), one of which (12d) forms the stiffened wall.

## Patentansprüche

1. Gerät (1) zur Klimatisierung und/oder zum Beheizen für Kraftfahrzeugfahrgastzellen, mindestens eine Luftleitung (10) umfassend, eine Außenwand (11) aufweisend, die eine um eine Achse (X'X) angelenkte Schutzklappe (20) aufnimmt, wobei die besagte Klappe (20) von einem an mehreren Punkten (4a, 4b, 4c) auf einem versteiften Teil der Wand (11) befestigen Stellglied (28) gesteuert wird, **dadurch gekennzeichnet, dass** die besagte versteifte Wand (12d) mindestens einen durchbrochenen Bereich (Za, Zb, Zc) ohne Material in unmittelbarer Nähe mindestens eines der Befestigungspunkte des Stellglieds (28) aufweist, um die Übertragung der vom Betrieb des Stellglieds verursachten Schwingungen zu reduzieren, wobei der versteifte Teil von einem Rippengewirk (29) gebildet wird, die Einheiten des Wandmaterials (12d) begrenzen und sich die Befestigungspunkte an den Schnittpunkten dieses Gewirks befinden, wobei der von der oder von den durchbrochenen Bereichen (Za, Zb, Zc) gebildete Teil aus den Materialeinheiten besteht, welche die Befestigungspunkte umgeben.

2. Gerät nach Anspruch 1, wobei die Rippen (29) asymmetrisch sind, um einen mechanischen Halt an den Befestigungspunkten zu gewährleisten und um harmonische Schwingungsmodi zu vermeiden.

3. Gerät nach einem der vorhergehenden Ansprüche, wobei das Stellglied (28) mit der Außenwand (11) der Leitung (10) an mindestens drei verschiedenen Punkten mit Hilfe von Kontaktstücken (40a, 40b, 40c) verbunden ist, die geformt wurden und durch Leisten (41) verstärkt sind.

4. Gerät nach einem der vorhergehenden Ansprüche, wobei die Klappe (20) ihrer Winkelposition entsprechend die durchbrochenen Bereiche eines nicht gewünschten Lufteinlasses mit einem seitlichen Flügel (24) etwa verdeckt.

5. Gerät nach Anspruch 4, wobei die Klappe (20) trommelähnlich ist, einen Zylinderabschnitt aufweisend, der von Seitenwangen (24, 25) begrenzt wird.

6. Gerät nach einem der vorhergehenden Ansprüche, wobei die Leitung ein Lufteinlassgehäuse ist (12), das am Eingang in das Gerät platziert ist, wobei dieses Gehäuse einen externen Lufteinlass (12a) aufweist, einen Einlass für recycelte Luft (12b), einen Luftauslass (12c) und zwei Seitenwände (12d, 12e), von denen eine (12d) die verstärkte Wand bildet.
